# EUROPEAN PATENT APPLICATION

(11) **EP 3 696 650 A1**
(43) Date of publication of application: **19.08.2020**
(21) Application number: 19157822.8
(22) Date of filing: 18.02.2019
(51) Int. Cl.: G06F 3/01, G06T 19/00

(54) **DIRECT VOLUME HAPTIC RENDERING**

(71) Applicant: Siemens Healthcare GmbH, 91052 Erlangen (DE)
(72) Inventor: SUDARSKY, Sandra, Bedminster, NJ New Jersey 097921 (US)
(74) Representative: EIP

(57) **Abstract**

A method comprises presenting a visualization of a plurality of anatomical objects in a user's display and monitoring a position of a haptic feedback device operated by the user with respect to the visualization. Based on the monitored position, it is determined that the haptic feedback device is being used to virtually touch a particular object in the visualization. A resistance force for the particular object is calculated using a force model parameterized by one or more coefficients corresponding to the object. This resistance force is used to provide a haptic feedback with the haptic feedback device.

## Description

### TECHNICAL FIELD

The present disclosure relates generally to providing direct haptic feedback when viewing three-dimensional images in a virtual reality (VR) display. The various systems, methods, and apparatuses described herein may be applied to, for example, provide an immersive, interactive visualization of anatomical image data.

### BACKGROUND

The immersive experience offered by virtual reality (VR) simulations provides enhanced understanding of complex anatomical structures and offers a free risk, controlled environment in which to practice medical treatments. One of the major obstacles remaining for virtual reality surgery and training is the ability to generate real-time realistic haptic feedback simulation as the user interacts directly with volumetric data.

Realistic simulation of the elastic deformation of tissues and organs is a very difficult problem. Finite element methods have been used to model deformable objects generating quite convincing simulations for specific applications such as needle insertions and laparoscopic surgeries. These methods are computationally expensive and can only be used to simulate relatively simple models in real time. Moreover, these techniques require preprocessing steps to segment the volumetric data to generate geometrical representations of the scanned volume.

### SUMMARY

Embodiments of the present invention address and overcome one or more of the above shortcomings and drawbacks, by providing methods, systems, and apparatuses related to providing haptic feedback in virtual reality (VR) presentations. Briefly, resistive force is calculated for objects in the image based on their physical characteristics. This resistive force is then used to provide haptic feedback to the user when he or she virtually "touches" a particular object.

In some embodiments, a method comprises presenting a visualization of a plurality of anatomical objects in a user's display and monitoring a position of a haptic feedback device operated by the user with respect to the visualization. Based on the monitored position, it is determined that the haptic feedback device is being used to virtually touch a particular object in the visualization. A resistance force for the particular object is calculated using a force model parameterized by one or more coefficients corresponding to the object. This resistance force is used to provide a haptic feedback with the haptic feedback device.

In other embodiments, a method of providing haptic feedback to an image comprising a plurality of voxels includes identifying a plurality of voxel density values corresponding to the voxels in the image. The voxels are colored based on their corresponding voxel density values to yield a colored image. This colored image is then presented in a visualization of a user's display. A haptic feedback device is operated by the user. The position of this haptic feedback device with respect to the visualization is monitored. When the haptic feedback is in proximity to a particular set of voxels in the visualization that correspond to an object, a "virtual touch" of those voxels occurs. A resistance force is calculated using a model parameterized by one or more coefficients associated with the object. This resistance force is used to provide haptic feedback to the user with the haptic feedback device.

According to other embodiments, a system comprises a display device, a haptic feedback device, and a computing system. The display device presents an image to a user, wherein the image comprises a plurality of voxels. The haptic feedback device is operated by the user to interact with the image. The computing system identifies voxel density values corresponding to the voxels in the image, and colors the voxels based on their corresponding voxel density values to yield a colored image. The computing system presents the colored image in a visualization of a user's display, and monitors a position of the haptic feedback device. The computing system determines, based on the monitored position, that the haptic feedback device is being used to virtually touch a particular set of voxels in the visualization corresponding to an object. Then the computing system calculates a resistance force using a spring mass model parameterized by one or more coefficients corresponding to the object, and uses the resistance force to provide a haptic feedback to the user with the haptic feedback device.

Additional features and advantages of the invention will be made apparent from the following detailed description of illustrative embodiments that proceeds with reference to the accompanying drawings.

### BRIEF DESCRIPTION OF THE DRAWINGS

The foregoing and other aspects of the present invention are best understood from the following detailed description when read in connection with the accompanying drawings. For the purpose of illustrating the invention, there is shown in the drawings embodiments that are presently preferred, it being understood, however, that the invention is not limited to the specific instrumentalities disclosed. Included in the drawings are the following Figures:
FIG. 1A provides an example system for provide direct haptic feedback in a VR context;
FIG. 1B shows an example image that may be used in visualizations generated with the techniques described herein;
FIG. 1C shows example voxel density values that may be used for coloring images, according to some embodiments;
FIG. 1D shows example stiffness and damping coefficients that may be used in determining resistive forces, according to some embodiments;
FIG. 2 provides an example method for providing direct haptic feedback in a VR context; and
FIG. 3 illustrates an exemplary computing environment within which embodiments of the invention may be implemented

### DETAILED DESCRIPTION

The following disclosure describes the present invention according to several embodiments directed at methods, systems, and apparatuses related to direct haptic rendering. Inspired by the idea of transfer functions which describe a simple mapping of volumetric scalar data to optical properties such as color and opacity, the techniques described herein render feedback forces acting on surgical instruments by accumulating force contributions from the different tissue types traversed by the virtual surgical device. One advantage of the techniques described herein compared to convention elastic deformation simulations is its high performance ideal for real time simulations and the ability to render the feedback forces directly from the volumetric data without any preprocessing step. When dealing directly with volume data as opposed to geometric representations of the data, the user can control which regions are rendered by making unimportant regions transparent. The approach discussed herein couples the force feedback computation with the visualization.

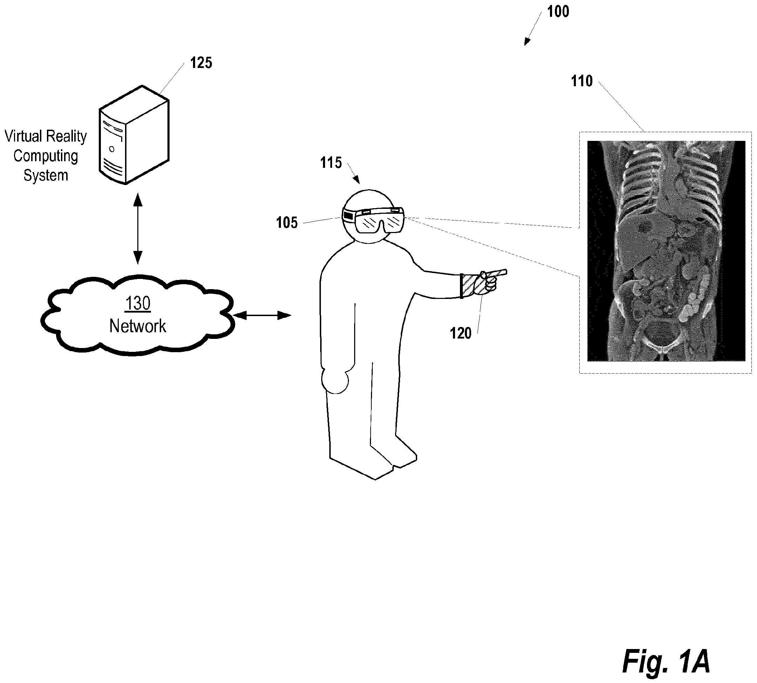

FIG. 1A shows an example system 100 for direct haptic feedback, according to some embodiments. A Display Device 105 presents an Image 110 to a User 115. From time to time, for convenience of description, CT imaging data may be used herein as an exemplary imaging modality. It will be appreciated, however, that data from any type of imaging modality including but not limited to X-Ray radiographs, MRI, CT, PET (positron emission tomography), PET-CT, SPECT, SPECT-CT, MR-PET, 3D ultrasound images or the like may also be used in various embodiments of the invention. Furthermore, again for the convenience of description, the techniques describe herein refer to anatomical images; however it should be understood that the disclosed techniques can be readily applied to images that are not anatomical in nature. Additionally, the concepts can be applied to other forms of images including, without limitation holograms.

In the example of FIG. 1A, the Display Device 105 is a head-mounted display (HMD) worn by the User 115. In other embodiments, as an alternative, a VR HMD mount may be used that allows the User 115 to insert a smartphone in the mount to be used as the display device. Moreover, it should be understood, that other types of displays generally known in the art can be used with the present invention (e.g., desktop computing monitors, etc.). One example process for displaying three-dimensional images on HMDs is described in U.S. Patent Application Publication No. 20020082498A1, entitled "Intra-operative image-guided neurosurgery with augmented reality visualization" and filed October 5, 2001, the entirety of which is incorporated herein by reference.

The User 115 wears a Haptic Feedback Device 120 which allows the User 115 to interact with the Image 110. In the example of FIG. 1A, the Haptic Feedback Device 120 is a glove that allows the User 115 to virtually "touch" the Image 110. In this configuration, haptic feedback may be provided to the User 115, for example, using a plurality of linear resistant actuators (LRAs) embedded in the glove. Techniques for using LRAs to provide haptic feedback are generally known in the art and, thus, these techniques are described in detail herein. In some embodiments, the system 100 can be used in an educational context to simulate an anatomical dissection. There the Haptic Feedback Device 120 could be a medical instrument such as a scalpel-like tool that provides haptic feedback as the User 115 virtually "cuts" the anatomical features in the Image 110.

A Virtual Reality (VR) Computing System 125 controls the Display Device 105 and the Haptic Feedback Device 120 by providing instructions and other data over a Network 130. This Network 130 may generally be any type of network known in the art (e.g., Wi-Fi, Bluetooth, ZigBee, etc.).

The VR Computing System 125 provides an immersive experience for the User 115 that connects the visual display presented in the Display Device 105 with the sensations provided by the Haptic Feedback Device 120. Various techniques can be used to provide this immersive experience. For example, in some embodiments, a computed tomography (CT) image is presented to the user. As is generally understood in the art, CT scanners measure the X-ray radiodensity attenuation values of body tissue in Hounsfield units (HU). These X-ray radiodensity attenuation values are referred to herein as "voxel density values." In a typical full body scan, the distribution of voxel density values from -1000 HU for air to 1000 HU for cortical bone. A transfer function may be applied to the voxel density values to determine how various voxels in the image data appear in the rendered image. For example, the transfer function may define the transparency, visibility, opacity or color for voxel (or intensity) values. The shading of the 3D representation in the rendered image provides information about the geometric properties (e.g., depth, width, height, etc.) of the region of interest. In addition, the color and/or transparency values in the 3D representation provide indications of the material properties (e.g., tissue densities) of the features in the region of interest. One example of using a transfer function is described in U.S. Patent Publication No. 20110063288A1 entitled "Transfer function for volume rendering," and filed September 10, 2010, the entirety of which is incorporated herein by reference.

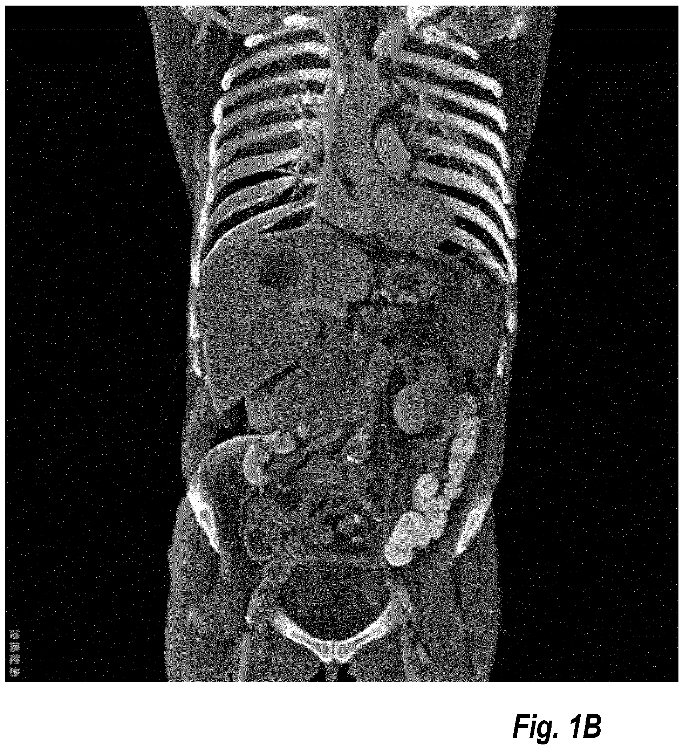

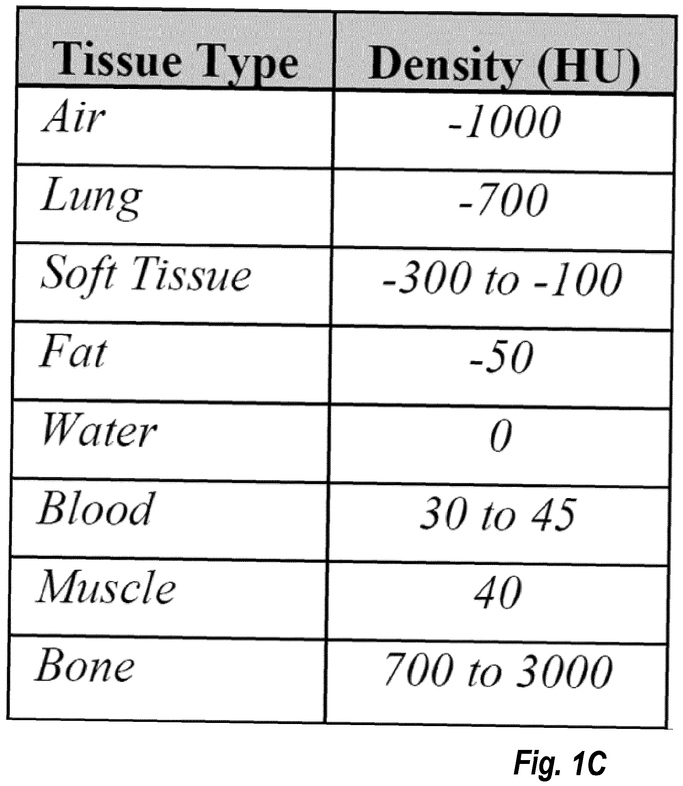

With respect to the present disclosure, the VR Computing System 125 colors the voxels of the Image 110 by applying a transfer function to the voxel density values associated with the Image 110. This colored Image 110 can then be presented in the Display Device 105 for viewing by the User 115. In some embodiments, as a supplement or alternative to colorization, other visual properties may be adjusted based on the voxel density values such as opacity and shading. FIG. 1B provides the example of a "colorized" image (presented in grayscale for this disclosure). FIG. 1C shows example voxel density values that may be used for doing the coloring.

While the Image 110 is displayed to the User 115, the VR Computing System 125 monitors the position of the Haptic Feedback Device 120 as it moves through space. In this case, the Display Device 105 and the Haptic Feedback Device 120 may be registered in a common three dimensional coordinate space. This registration can take place, for example, during the initial setup of the system 100. Once the two devices co-register, the VR Computing System 125 will be able to determine when the Haptic Feedback Device 120 is being used to virtually "touch" a particular set of voxels in the Image 110. For example, in one embodiment, the Image 110 is presented within a visualization presented in the Display Device 105. This visualization also includes a depiction of the User's 115 hand. When the Haptic Feedback Device 120 moves in the real world, the depiction of the User's 115 hand moves in the visualization. A "touch" occurs when the Haptic Feedback Device 120 is within a predetermined distance from a particular set of voxels within the coordinate system. This predetermined distance can be calibrated, for example, based on the sensitivity of the Haptic Feedback Device 120.

As an illustration of a virtual touch, consider the presentation of a full body CT scan of human anatomy. The user can navigate around the image by moving his or her head (and thus moving the Display Device 105). The User 115 can virtually touch an anatomical feature (tissue, bone, etc.) by moving the Haptic Feedback Device 120 "into" a desired region of interest. For example, for the glove shown in FIG. 1A, the User 115 may extend his or her finger in the glove and "push" on the region of interest. A virtual touch will then be performed on the voxels associated with this region.

When a virtual touch occurs, the VR Computing System 125 first identifies which object is being touched in the image. This may be performed, for example, by a simple lookup using a table to correlate voxel location to object. Such as table can be constructed by segmenting individual objects and identifying their particular locations. The exact type of object (e.g., bone, tissue, etc.) can be specified automatically (e.g., using machine learning) or manually by one or more persons. Once the object being touched is identified, its resistance force is calculated using a force model parameterized by one or more coefficients corresponding to the object being touched. This resistive force is then used to provide a haptic feedback to the user with the Haptic Feedback Device 120.

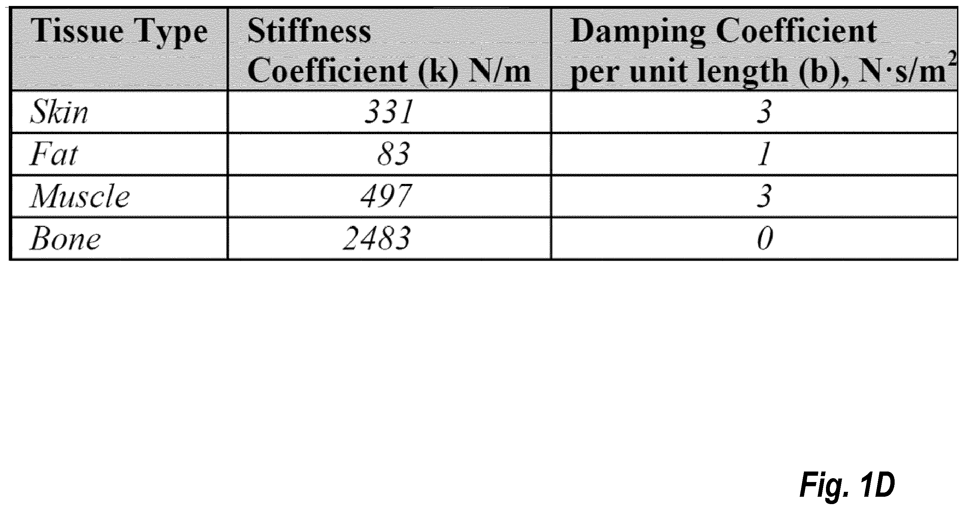

In some embodiments, the force model is a computational efficient spring mass model *F*=*kx*+*bv,* where k is the stiffness coefficient, b the damping coefficient, x the displacement in the coordinate space, and v the velocity of the touch. As transfer functions assign color and transparency to different tissue types based on the scalar values of the scanned volume, different stiffness and damping coefficients can be assigned to each tissue type. FIG. 1D shows example tissue types and corresponding stiffness and damping coefficients. These coefficient values are derived from Gerovichev O., Marayong P., Okamura A.M. (2002), "The Effect of Visual and Haptic Feedback on Manual and Teleoperated Needle Insertion". In: Dohi T., Kikinis R. (eds) Medical Image Computing and Computer-Assisted Intervention - MICCAI 2002. Lecture Notes in Computer Science, Vol 2488. Springer, Berlin, Heidelberg. The coefficients in the table shown in FIG. 1D are meant to be examples, and it should be understood that other coefficients may be used as desired by the user. The values for the coefficients may be determined, for example, based on medical research documents, text books, etc. Alternatively, or additionally, the coefficient values may be supplemented as desired by a user. In this way, the user can create a customized experience. In one set, the coefficient values may be stored, for example, in a local database within the VR Computing System 125 to allow for quick look-up of relevant values during operation.

As an alternative to explicitly identifying objects, in some embodiments, voxel density values may be correlated with certain coefficient values. To continue with the spring mass model example, voxel density values can be correlated to a particular set of stiffness and damping coefficients. Thus, when a virtual touch occurs, the voxel density values can be used to immediately determine the input to the model and, thus calculate the resistive force.

In some embodiments, the force models discussed above are part of a second transfer function employed for determining resistive force. This second transfer function further takes into consideration voxel density value, thus linking the presentation colors/opacity to the resistive force. For example, the voxel density value could be used to scale the output of the spring mass model. Thus, air (-1000 HU) would provide no resistive force, while cortical bone (1000 HU) would provide maximum resistive force. In other embodiments, there may be a finite number of resistive force options provided by the Haptic Feedback Device 120. In this case, ranges of voxel density values can be assigned particular scaling values to be applied to the output of the spring mass model. The transfer function would then return the resistive force value that corresponds to the range in which a particular voxel density value lies.

The haptic feedback can be provided in a variety of ways. For example, in some embodiments, the Haptic Feedback Device 120 comprises an exoskeleton that applies resistive force feedback to each individual finger. When the User 115 extends his or her finger to "poke" a particular region of the image, the resistive force will be applied through the exoskeleton to the finger performing the poking. In other embodiments, the glove can be connected to a more complicated harness system that provides resistance for the User's 115 whole hand as it moves in three-dimensional space. It should be further noted that other forms of haptic feedback may be applied as an alternative or supplement to simple resistive force (e.g., vibration, auditory, etc.)

Note that, although a single computing system is shown in FIG. 1A, in other embodiments, multiple computing systems may be employed. Additionally, in other embodiments, a portion or all of the computing system can be embedded in the Display Device 105 and/or the Haptic Feedback Device 120. For example, in one embodiment, the Display Device 105 and the Haptic Feedback Device 120 each have embedded computing systems that communicate with one another to perform the operations of the VR Computing System 125.

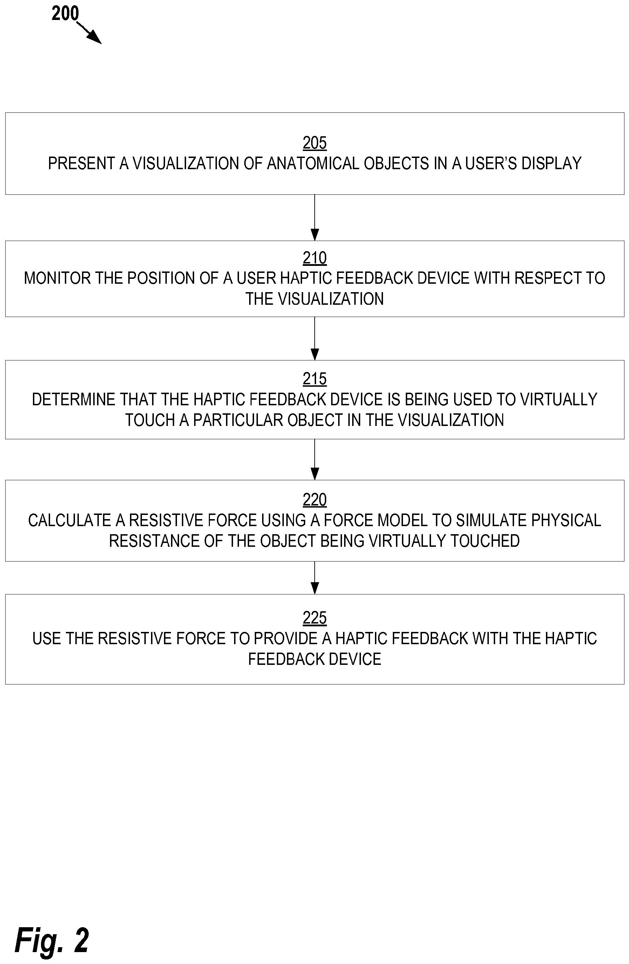

FIG. 2 provides a flowchart 200 for providing haptic feedback in a virtual reality setting, according to some embodiments. Starting at step 205, a visualization of a plurality of anatomical objects is presented in a user's display. This visualization may comprise, for example, a three-dimensional image acquired from a medical imaging scanner. In some embodiments, individual anatomical objects are segmented from an image data set using one or more techniques known in the art. At step 210, the position of the user's haptic feedback device with respect to the visualization is monitored (e.g., by the haptic feedback device itself or by an external computing system as shown in FIG. 1A). The monitored positional information is used at step 215 to determine that the haptic feedback device is being used to virtually touch a particular object in the visualization.

Continuing with reference to FIG. 2, the resistive force is calculated at step 220 that will simulate the physical resistance one would have when touching they object in the real-world. In the real-world, the resistance is determined, in part, based on the overall density and other anatomical characteristics of the object. In the virtual space, the resistive force can simulate this resistance based on force model such as a spring model parameterized by one or more coefficients (e.g., stiffness, damping) corresponding to the object being touched (as described above with reference to FIG. 1A). At step 225, the resistance force is used to provide a haptic feedback with the haptic feedback device.

In some embodiments, an anatomical object in the visualization is colored based on a density value corresponding to the anatomical object. The color of each anatomical object may be determined, for example, using a transfer function that translates the density value into a color value. The resistive force can then be calculated using a second transfer function that makes the resistive force proportional to the color value. For example, as noted above, the second transfer function may scale the output of the spring mass model based on voxel density values directly. Alternatively, because color values are already generated, the second transfer function can generate the scaling value based on a color value. This concept is to be similarly applied to the opacity of the object. That is, a transfer function may be used to generate opacity for different portions of the anatomical objects and, optionally, the resistive force may be proportional to the opacity value. The various transfer functions discussed above can be fixed or, in some instances, the user can interactively modify the transfer functions through the user's display by shifting or scaling different values. For example, in embodiments where a HMD is employed, the user may use gestures or voice commands to modify the transfer function(s) to achieve a desired visualization. As one example, the user may adjust the transfer function used for generating resistive force to provide more or less sensitivity in the haptic feedback device.

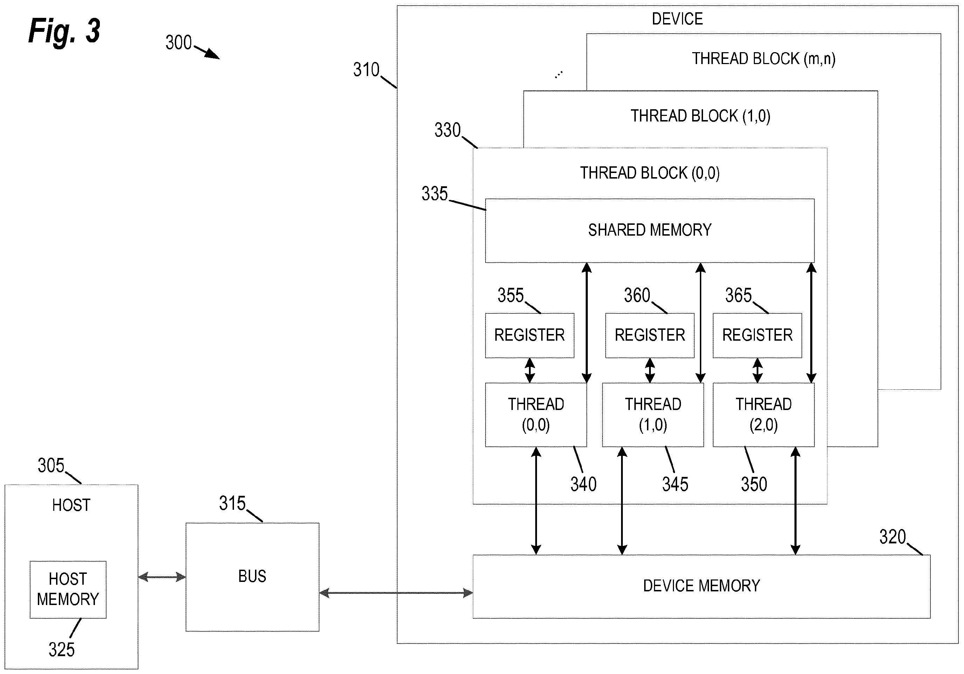

FIG. 3 provides an example of a parallel processing memory architecture 300 that may be utilized to render and present the VR experience discussed above. This architecture 300 may be used in embodiments of the present invention where NVIDIA™ CUDA (or a similar parallel computing platform) is used. The architecture includes a host computing unit ("host") 305 and a GPU device ("device") 310 connected via a bus 315 (e.g., a PCIe bus). The host 305 includes the central processing unit, or "CPU" (not shown in FIG. 3) and host memory 325 accessible to the CPU. The device 310 includes the graphics processing unit (GPU) and its associated memory 320, referred to herein as device memory. The device memory 320 may include various types of memory, each optimized for different memory usages. For example, in some embodiments, the device memory includes global memory, constant memory, and texture memory.

Parallel portions of the rendering algorithms may be executed on the architecture 300 as "device kernels" or simply "kernels." A kernel comprises parameterized code configured to perform a particular function. The parallel computing platform is configured to execute these kernels in an optimal manner across the architecture 300 based on parameters, settings, and other selections provided by the user. Additionally, in some embodiments, the parallel computing platform may include additional functionality to allow for automatic processing of kernels in an optimal manner with minimal input provided by the user.

The processing required for each kernel is performed by grid of thread blocks (described in greater detail below). Using concurrent kernel execution, streams, and synchronization with lightweight events, the architecture 300 of FIG. 3 (or similar architectures) may be used to parallelize rendering tasks. For example, in some embodiments, processing of individual cell images may be performed in parallel.

The device 310 includes one or more thread blocks 330 which represent the computation unit of the device 310. The term thread block refers to a group of threads that can cooperate via shared memory and synchronize their execution to coordinate memory accesses. For example, in FIG. 3, threads 340, 345 and 350 operate in thread block 330 and access shared memory 335. Depending on the parallel computing platform used, thread blocks may be organized in a grid structure. A computation or series of computations may then be mapped onto this grid. For example, in embodiments utilizing CUDA, computations may be mapped on one-, two-, or three-dimensional grids. Each grid contains multiple thread blocks, and each thread block contains multiple threads. For example, in FIG. 3, the thread blocks 330 are organized in a two dimensional grid structure with m+1 rows and n+1 columns. Generally, threads in different thread blocks of the same grid cannot communicate or synchronize with each other. However, thread blocks in the same grid can run on the same multiprocessor within the GPU at the same time. The number of threads in each thread block may be limited by hardware or software constraints. In some embodiments, processing of subsets of the training data or operations performed by the algorithms discussed herein may be partitioned over thread blocks automatically by the parallel computing platform software. However, in other embodiments, the individual thread blocks can be selected and configured to optimize rendering of images. For example, in one embodiment, each thread block is assigned a portion of the overall image.

Continuing with reference to FIG. 3, registers 355, 360, and 365 represent the fast memory available to thread block 330. Each register is only accessible by a single thread. Thus, for example, register 355 may only be accessed by thread 340. Conversely, shared memory is allocated per thread block, so all threads in the block have access to the same shared memory. Thus, shared memory 335 is designed to be accessed, in parallel, by each thread 340, 345, and 350 in thread block 330. Threads can access data in shared memory 335 loaded from device memory 320 by other threads within the same thread block (e.g., thread block 330). The device memory 320 is accessed by all blocks of the grid and may be implemented using, for example, Dynamic Random-Access Memory (DRAM).

Each thread can have one or more levels of memory access. For example, in the architecture 300 of FIG. 3, each thread may have three levels of memory access. First, each thread 340, 345, 350, can read and write to its corresponding registers 355, 360, and 365. Registers provide the fastest memory access to threads because there are no synchronization issues and the register is generally located close to a multiprocessor executing the thread. Second, each thread 340, 345, 350 in thread block 330, may read and write data to the shared memory 335 corresponding to that block 330. Generally, the time required for a thread to access shared memory exceeds that of register access due to the need to synchronize access among all the threads in the thread block. However, like the registers in the thread block, the shared memory is typically located close to the multiprocessor executing the threads. The third level of memory access allows all threads on the device 310 to read and/or write to the device memory. Device memory requires the longest time to access because access must be synchronized across the thread blocks operating on the device. Thus, in some embodiments, the processing of each cell image is coded such that it primarily utilizes registers and shared memory and only utilizes device memory as necessary to move data in and out of a thread block.

The embodiments of the present disclosure may be implemented with any combination of hardware and software. For example, aside from parallel processing architecture presented in FIG. 3, standard computing platforms (e.g., servers, desktop computer, etc.) may be specially configured to perform the techniques discussed herein. In addition, the embodiments of the present disclosure may be included in an article of manufacture (e.g., one or more computer program products) having, for example, computer-readable, non-transitory media. The media may have embodied therein computer readable program code for providing and facilitating the mechanisms of the embodiments of the present disclosure. The article of manufacture can be included as part of a computer system or sold separately.

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

An executable application, as used herein, comprises code or machine readable instructions for conditioning the processor to implement predetermined functions, such as those of an operating system, a context data acquisition system or other information processing system, for example, in response to user command or input. An executable procedure is a segment of code or machine readable instruction, sub-routine, or other distinct section of code or portion of an executable application for performing one or more particular processes. These processes may include receiving input data and/or parameters, performing operations on received input data and/or performing functions in response to received input parameters, and providing resulting output data and/or parameters.

A graphical user interface (GUI), as used herein, comprises one or more display images, generated by a display processor and enabling user interaction with a processor or other device and associated data acquisition and processing functions. The GUI also includes an executable procedure or executable application. The executable procedure or executable application conditions the display processor to generate signals representing the GUI display images. These signals are supplied to a display device 105 which displays the image for viewing by the user. The processor, under control of an executable procedure or executable application, manipulates the GUI display images in response to signals received from the input devices. In this way, the user may interact with the display image using the input devices, enabling user interaction with the processor or other device.

As used herein, the term "module" can refer to either or both of: (i) a software component that causes an electronic device to accept various inputs and generate certain outputs; or (ii) an electronic input/output interface, such as a panel, frame, textbox, window or other portion of a GUI.

The functions and process steps herein may be performed automatically or wholly or partially in response to user command. An activity (including a step) performed automatically is performed in response to one or more executable instructions or device operation without user direct initiation of the activity.

The system and processes of the figures are not exclusive. Other systems, processes and menus may be derived in accordance with the principles of the invention to accomplish the same objectives. Although this invention has been described with reference to particular embodiments, it is to be understood that the embodiments and variations shown and described herein are for illustration purposes only. Modifications to the current design may be implemented by those skilled in the art, without departing from the scope of the invention. As described herein, the various systems, subsystems, agents, managers and processes can be implemented using hardware components, software components, and/or combinations thereof. No claim element herein is to be construed under the provisions of 35 U.S.C. 112(f) unless the element is expressly recited using the phrase "means for."

## Claims

1. A method comprising:
presenting (205) a visualization (110) of a plurality of anatomical objects in a user (115)'s display;
monitoring (210) a position of a haptic feedback device (120) operated by the user (115) with respect to the visualization (110);
determining (215) based on the monitored position that the haptic feedback device (120) is being used to virtually touch a particular object in the visualization (110);
calculating (220) a resistance force for the particular object using a force model parameterized by one or more coefficients corresponding to the object;
using (225) the resistance force to provide a haptic feedback with the haptic feedback device (120).

2. The method of claim 1, wherein the force model is a spring mass model and the one or more coefficients include a stiffness coefficient and a damping coefficient associated with the particular object.

3. The method of claim 1, further comprising:
based an object type associated with the object, retrieving the one or more coefficients from a data source.

4. The method of claim 1, wherein the visualization (110) comprises an image and the method further comprises:
based voxel density values in the region of the image being virtually touched, retrieving the one or more coefficients from a data source.

5. The method of claim 1, wherein the visualization (110) comprises an image and the method further comprises:
coloring the image based on voxel density values associated with the image, wherein the color of each voxel is determined using a transfer function that translates the voxel density value into a color value.

6. The method of claim 5, wherein the resistive force calculated using the force model is proportional to the color value.

7. The method of claim 1, wherein the visualization (110) comprises an image and the method further comprises:
adjusting opacity of each voxel in the image based on voxel density values associated with the image, wherein the opacity is determined using a transfer function that translates the voxel density value into an opacity value.

8. The method of claim 7, wherein the resistive force calculated using the force model is proportional to the opacity value.

9. The method of claim 1, wherein the haptic feedback device (120) is a glove worn by the user (115) and the haptic feedback is provided using a plurality of linear resistant actuators (LRAs) embedded in the glove.

10. The method of claim 1, wherein the haptic feedback device (120) is a medical instrument and the image is presented by display device (105) within a simulation of an anatomical dissection.

11. A system comprising:
a display device (105) presenting an image to a user (115), wherein the image comprises a plurality of voxels;
a haptic feedback device (120) (120) operated by the user (115) to interact with the image;
a computing system (125, 300) configured to:
identify a plurality of voxel density values corresponding to the voxels in the image,
color the voxels based on their corresponding voxel density values to yield a colored image,
present the colored image in a visualization (110) of a user (115)'s display,
monitor a position of the haptic feedback device (120) (120), determine, based on the monitored position, that the haptic feedback device (120) (120) is being used to virtually touch a particular set of voxels in the visualization (110) corresponding to an object,
calculate a resistance force using a spring mass model parameterized by one or more coefficients corresponding to the object, and
use the resistance force to provide a haptic feedback to the user (115) with the haptic feedback device (120) (120).

12. The system of claim 11, wherein the display device (105) is a head-mounted display.

13. The system of claim 11, wherein the haptic feedback device (120) (120) is a glove worn by the user (115) and the haptic feedback is provided using a plurality of linear resistant actuators (LRAs) embedded in the glove.

14. The system of claim 11, wherein the haptic feedback device (120) (120) is a medical instrument and the image is presented by the display device (105) within a simulation of an anatomical dissection.
